# FASCICULE DE BREVET EUROPEEN

(11) **EP 3 081 024 B1**
(45) Date de publication et mention de la délivrance du brevet: **19.06.2019**
(21) Numéro de dépôt: 14814982.6
(22) Date de dépôt: 27.11.2014
(51) Int. Cl.: H04W 92/12, H04L 12/851, H04L 12/761, H04W 88/08, H04W 88/12

(54) **TRANSPORT DE DONNEES RADIO MULTIPOINT A MULTIPOINT**
MULTIPOINT-TO-MULTIPOINT-FUNKDATENÜBERTRAGUNG
MULTIPOINT-TO-MULTIPOINT RADIO DATA TRANSPORT

(30) Priorité: 13.12.2013 FR 1362561
(43) Date de publication de la demande: 19.10.2016
(73) Titulaire: Orange, 75015 Paris (FR)
(72) Inventeur: LE CLECH, Fabien, F-92130 Issy Les Moulineaux (FR); PIZZINAT, Anna, 91370 Verrières Le Buisson (FR)
(86) Numéro de dépôt international: PCT/FR2014/053070
(87) Numéro de publication internationale: WO 2015/086945

(56) Documents cités:
- EP-A1- 2 373 116
- EP-A1- 2 512 202
- EP-A1- 2 602 948
- EP-A2- 2 104 383
- EP-A2- 2 469 940
- US-A1- 2007 116 046
- US-A1- 2009 257 450
- US-A1- 2012 057 572
- "CPRI Specification V5.0 - Common Public Radio Interface (CPRI); Interface Specification", , 21 septembre 2011 (2011-09-21), XP055033500, Extrait de l'Internet: URL:http://www.cpri.info/downloads/CPRI_v_ 5_0_2011-09-21.pdf [extrait le 2012-07-20] cité dans la demande

## Description

### 1. Domaine de l'invention

La demande d'invention se situe dans le domaine des réseaux d'accès mobile, et plus particulièrement dans le domaine de la collecte et de la distribution des données radio entre les unités radio à proximité des antennes et les équipements contrôleurs d'antennes.

### 2. Etat de la technique antérieure

Dans une architecture de réseau d'accès mobile traditionnelle, une station de base est installée par exemple sur un pilône ou un immeuble et comprend une unité radio (RU, "radio unit" en anglais) par antenne, et une unité de contrôle (DU, "digital unit" en anglais) par unité radio, à proximité de l'antenne, par exemple à la base du pilône ou dans un local technique de l'immeuble.

L'unité radio d'une station de base est entre autre chargée de la réception et de la transmission du signal radio en provenance et en direction de l'antenne, et de sa numérisation pour transmission à l'unité de contrôle.

Les unités radio sont aussi appelées têtes radiofréquence, ou en anglais remote radio head (RRH), ou radio equipment (RE). Par souci de clarté et de simplicité, elles sont appelées par la suite des dispositifs d'antenne, étant entendu que cette appellation couvre le dispositif permettant à l'antenne d'être connectée à une unité de contrôle.

L'unité de contrôle d'une station de base est entre autre chargée de faire le traitement des données comprises dans le signal numérique traité par l'unité radio et de garantir la connexion vers un réseau de télécommunication.

Les unités de contrôle sont aussi appelées en anglais "base band unit" (BBU) ou "remote équipement control" (REC). Par souci de clarté et de simplicité, elles sont appelées par la suite des dispositifs contrôleurs d'antenne, ou plus simplement des contrôleurs d'antenne, étant entendu que cette appellation couvre le dispositif permettant à l'unité de contrôle d'être connectée à un dispositif d'antenne.

La connexion entre le dispositif d'antenne et le contrôleur d'antenne, se fait par un lien de données radio numérisées porté par une fibre optique ou un lien radio sans fil et utilisant le protocole CPRI (Common Public Radio Interface), OBSAI (Open Base Station Architecture Initiative) ou ORI (Open Radio Equipment Interface ; ORI s'appuie sur CPRI). Ce lien est appelé par la suite lien CPRI car le protocole CPRI est le plus utilisé, étant entendu que cette appellation couvre aussi les autres protocoles.

Avec la multiplication des réseaux d'accès mobiles et l'évolution des normes qui l'accompagne, les opérateurs de communications mobiles ont tendance à éloigner les contrôleurs des sites d'antenne et donc des dispositifs d'antenne, selon des critères qui leurs sont propres. Par exemple, un opérateur peut regrouper dans un central unique, loin des antennes, certains de ses contrôleurs d'antennes desservant les antennes de plusieurs sites d'antennes. De plus, comme les antennes et les dispositifs d'antenne peuvent être partagées entre plusieurs opérateurs, le besoin apparait de connecter un dispositif d'antenne à plusieurs contrôleurs, un contrôleur par opérateur, sur des lieux distincts ou non, par autant de liens CPRI distincts. La norme "CPRI specification v5.0" prévoit en section 2.3 qu'un dispositif d'antenne puisse être servi par plusieurs dispositifs contrôleurs d'antenne, en se reposant sur des liens CPRI point à point entre le dispositif d'antenne et chacun des dispositifs contrôleurs d'antenne.

Cette multiplicité de liens CPRI reposant sur autant de fibres optiques ou de liens radio sans fil représente un coût, combiné à l'éloignement croissant entre contrôleurs et antennes, impose des contraintes d'organisation des sites hébergeant les contrôleurs d'antenne, qui sont d'autant plus gênantes que les contrôleurs sont gérés par des opérateurs différents.

EP2512202 divulgue un "load balancer router" pour partager des données entre une pluralité de RRH, c'est-à-dire RE, et une pluralité de BBU, c'est-à-dire REC, sur une interface CPRI.

Un des buts de l'invention est de remédier à ces inconvénients de l'état de la technique.

### 3. Exposé de l'invention

L'invention concerne un dispositif et un procédé de traitement numérique de signal d'antenne présentés dans les revendications indépendantes 1 et 2.

L'invention vient améliorer la situation à l'aide d'un dispositif d'aiguillage d'échantillons de données radio numérisés appelés échantillons, émis par un dispositif de traitement numérique de signal d'antenne appelé dispositif d'antenne, au travers d'un premier lien de données, vers une pluralité de dispositifs contrôleurs d'antenne destinataires identifiés par une pluralité respective d'identifiants de contrôleur, le dispositif d'aiguillage comprenant les modules suivants :
- interception de premières trames de données en provenance du dispositif d'antenne et à destination de la pluralité de dispositifs contrôleurs, les premières trames comprenant les échantillons,
- démultiplexage des échantillons des premières trames de données interceptées,
- extraction des identifiants de contrôleurs des premières trames de données interceptées,
- groupement des échantillons démultiplexés par identifiant de contrôleur,
- multiplexage des échantillons par groupe dans des secondes trames de données, une seconde trame de données étant associée à un identifiant de contrôleur,
- transmission des secondes trames de données par l'intermédiaire d'une pluralité de seconds liens de données associée respectivement à la pluralité de dispositifs contrôleurs d'antenne destinataires.

Le dispositif d'aiguillage selon l'invention résout les problèmes de l'état de la technique liés à la multiplicité des liens entre un dispositif d'antenne et les dispositifs contrôleurs, ainsi que l'éloignement croissant entre eux, en déportant le point où les trames de données doivent être aiguillées vers le bon dispositif contrôleur destinataire. En effet, grâce à l'invention les trames de données émises par le dispositif d'antenne sont interceptées par le dispositif d'aiguillage qui se charge de les transmettre vers le bon dispositif contrôleur destinataire.

De cette manière, la localisation des dispositifs contrôleurs n'est plus contrainte par celle du dispositif d'antenne. Il suffit de localiser le dispositif d'aiguillage en fonction de la localisation des dispositifs contrôleurs.

L'invention concerne aussi un dispositif de traitement numérique de signal d'antenne, appelé dispositif d'antenne, transmettant des échantillons de données radio numérisés, appelés échantillons, vers une pluralité de dispositifs contrôleurs d'antenne destinataires identifiés par une pluralité respective d'identifiants de contrôleur, le dispositif d'antenne comprenant les modules suivants :
- obtention des échantillons,
- identification de leur dispositif contrôleur respectif,
- multiplexage des échantillons dans des premières trames de données radio numérisées, appelées premières trames de données,
- insertion dans les premières trames de données des identifiants de contrôleur destinataires correspondant aux échantillons multiplexés,
- transmission des premières trames vers la pluralité de dispositifs contrôleurs d'antenne par l'intermédiaire d'un premier lien de données vers la pluralité de dispositifs contrôleurs d'antenne destinataires.

Dans la norme CPRI, les échantillons de données numérisées sont appelés "AxC" (Antenna-Carrier en anglais, ou porteuse-antenne) et représentent une quantité de données sous forme numérisée, telles que transportées sous forme analogique par une même porteuse entre une antenne et un terminal mobile, c'est à dire transportées dans la ou les bandes de fréquence allouées à l'opérateur du terminal mobile. Chaque échantillon correspond donc à un bloc de données destiné à être transporté dans un lien radio entre une antenne et un terminal mobile, à l'intérieur d'une bande de fréquence précisément attribuée à un opérateur mobile.

Il est rappelé que l'invention concerne la partie entre antenne et réseau, et non entre antenne et terminaux mobiles. Dans un environnement multi-opérateur, selon la technique antérieure décrite dans la norme CPRI, avant d'émettre des trames de données, un dispositif d'antenne doit trier les échantillons afin de ne pas les mélanger entre plusieurs opérateurs (entre plusieurs porteuses), car le dispositif contrôleur d'antenne de chaque opérateur, destinataire de ces trames et relié par un lien CPRI distinct au dispositif d'antenne, n'effectue pas ce tri lui-même.

Selon l'invention, le dispositif d'antenne ne trie pas les échantillons AxC et ne les émet pas sur des liens dédiés vers plusieurs dispositifs contrôleurs, mais les multiplexe afin qu'ils soient mélangés dans des trames de données qui pourront ainsi être émises sur un seul lien, évitant ainsi le recours à plusieurs liens séparés.

Ces trames, appelées dans la norme "trames CPRI", sont de même format que celles qui sont échangées entre un dispositif d'antenne et un dispositif contrôleur selon la technique antérieure, ce qui minimise les modifications nécessaires dans les dispositifs à chaque extrémité du lien.

L'invention concerne également un système de transmission d'échantillons de données radio numérisés appelés échantillons, entre au moins un dispositif de traitement numérique d'antenne, appelé dispositif d'antenne, et une pluralité de dispositifs contrôleurs d'antenne destinataires identifiés respectivement par un identifiant de contrôleur, le système comprenant au moins un dispositif d'antenne tel que celui qui vient d'être décrit, et un dispositif d'aiguillage tel que celui qui vient d'être décrit.

Dans le système de transmission selon l'invention, le dispositif d'antenne est connecté à un dispositif d'aiguillage qui est lui même connecté aux différents dispositifs contrôleurs d'antenne dédiés par opérateur.

Le lien entre le dispositif d'antenne et ce dispositif d'aiguillage, et les trames qu'il transporte, c'est à dire des trames CPRI, sont de même nature que les liens directs avec les dispositifs contrôleurs d'antenne selon la technique antérieure.

Pareillement, les liens entre le dispositif d'aiguillage et chacun des dispositifs contrôleurs d'antenne, ainsi que les trames qu'ils transportent, c'est à dire des trames CPRI, sont de même nature que les liens directs avec les dispositifs contrôleurs d'antenne selon la technique antérieure.

Aucune modification n'est donc nécessaire au niveau des dispositifs contrôleurs d'antenne, qui peuvent continuer à fonctionner comme s'ils avaient un lien point à point direct avec le dispositif d'antenne.

Grâce au premier lien entre le dispositif d'antenne et le dispositif d'aiguillage, il est donc aisé de déporter sur une grande distance le point d'éclatement vers les différents dispositifs contrôleurs d'antenne, et donc de choisir pour ceux-ci un emplacement éloigné des antennes, sans qu'aucune modification ne soit nécessaire à leur niveau.

De plus, un tel système de transmission selon l'invention permet en outre de connecter plus d'un dispositif d'antenne à la pluralité de contrôleurs d'antenne, toujours sans qu'aucune modification ne soit nécessaire à leur niveau, dans le cas où un ou plusieurs des contrôleurs d'antenne soit apte à contrôler plusieurs antennes à la fois, comme cela est aussi prévu dans la norme "CPRI specification v5.0". En d'autres termes, le système selon l'invention permet aussi la création et l'utilisation d'un réseau multipoint à multipoint entre des dispositifs d'antenne et des contrôleurs d'antenne.

Selon un aspect de l'invention, le système de transmission comprend en outre des premier et second modules de transport, le premier module de transport étant agencé pour :
- recevoir les premières trames de données au travers d'au moins un premier lien de données,
- encapsuler dans des trames de transport les premières trames de données,
- émettre les trames de transport vers le second module de transport au travers d'un lien de transport,
et le second module de transport étant agencé pour :
- recevoir les trames de transport au travers du lien de transport,
- obtenir les premières trames de données par désencapsulation à partir des trames de transport,
- délivrer au dispositif d'aiguillage les premières trames de données désencapsulées.

Grâce à cet aspect, les contraintes de localisation des dispositifs contrôleurs d'antenne, spécifiques aux liens CPRI, disparaissent complètement. En effet, en encapsulant les trames CPRI dans des trames de niveau supérieur, les trames CPRI peuvent emprunter un chemin dans un réseau de transport existant, tel qu'un réseau Ethernet ou un réseau Optical Data Network G.709, par exemple un chemin entre un premier équipement de transport proche du dispositif d'antenne et un second équipement de transport comprenant le dispositif d'aiguillage. Il suffit pour cela que le premier lien de données soit établi entre le dispositif d'antenne et un dispositif de transport qui est un point d'entrée de ce réseau de transport, et que le dispositif d'aiguillage soit adjacent à un autre dispositif de transport qui est un point de sortie de ce réseau de transport.

Ainsi, une plus grande flexibilité est permise pour choisir des emplacements appropriés pour les dispositifs contrôleurs d'antenne, même très éloignés des antennes. Cet avantage est obtenu à la fois pour un système point à multipoint, c'est à dire un dispositif d'antenne vers plusieurs dispositifs de contrôle, et pour un système multipoint à multipoint, c'est à dire plusieurs dispositifs d'antenne vers plusieurs dispositifs de contrôle.

L'invention concerne aussi un équipement de communication, comprenant une interface avec un réseau de transport, un dispositif d'aiguillage tel que celui qui vient d'être décrit et un module de transport agencé pour
- recevoir des trames de transport au travers de l'interface,
- obtenir des trames de données par désencapsulation à partir des trames de transport,
- délivrer au dispositif d'aiguillage les trames de données désencapsulées.

L'invention concerne aussi un procédé d'aiguillage d'échantillons de données radio numérisés appelés échantillons, émis par un dispositif de traitement numérique de signal d'antenne appelé dispositif d'antenne, vers une pluralité de dispositifs contrôleurs d'antenne destinataires identifiés par une pluralité respective d'identifiants de contrôleur, le procédé d'aiguillage comprenant les étapes suivantes:
- interception de premières trames de données en provenance du dispositif d'antenne et à destination de la pluralité de dispositifs contrôleurs, les premières trames comprenant les échantillons,
- démultiplexage des échantillons des premières trames de données interceptées,
- extraction des identifiants de contrôleurs des premières trames de données interceptées,
- groupement des échantillons démultiplexés par identifiant de contrôleur,
- multiplexage des échantillons par groupe dans des secondes trames de données, une seconde trame de données étant associée à un identifiant de contrôleur,
- transmission des secondes trames de données par l'intermédiaire d'une pluralité de seconds liens de données associée respectivement à la pluralité de dispositifs contrôleurs d'antenne destinataires.

Le dispositif d'aiguillage est apte à mettre en oeuvre le procédé d'aiguillage qui vient d'être décrit, dans tous ses modes de réalisation.

L'invention concerne également un procédé de traitement numérique de signal d'antenne, pour la transmission d'échantillons de données radio numérisés, appelés échantillons, vers une pluralité de dispositifs contrôleurs d'antenne destinataires identifiés par une pluralité respective d'identifiants de contrôleur, le procédé de traitement numérique de signal d'antenne comprenant les étapes suivantes :
- obtention des échantillons,
- identification de leur dispositif contrôleur respectif,
- multiplexage des échantillons dans des premières trames de données radio numérisées, appelées premières trames de données,
- insertion dans les premières trames de données des identifiants de contrôleur destinataires correspondant aux échantillons multiplexés,
- transmission des premières trames vers la pluralité de dispositifs contrôleurs d'antenne par l'intermédiaire d'un premier lien de données vers la pluralité de dispositifs contrôleurs d'antenne destinataires.

Selon un aspect de l'invention, l'étape d'identification du procédé de traitement numérique de signal d'antenne comprend les étapes suivantes pour chacun des échantillons d'une première trame de données donnée :
- identification d'une bande de fréquence associée à chaque échantillon;
- obtention d'un identifiant de contrôleur correspondant à la bande de fréquence identifiée.

Grâce à cet aspect, il est possible de retrouver à quel dispositif contrôleur d'antenne doit être remis chaque échantillon.

Selon un aspect de l'invention, l'étape d'insertion du procédé de traitement numérique de signal d'antenne comprend l'étape suivante pour chacune des premières trames de données :
- insertion des identifiants de contrôleur destinataires correspondant aux échantillons multiplexés dans un champ des premières trames de données appelé Vendor Specific dans la norme CPRI.

Grâce à cet aspect, il est possible d'utiliser un champ existant dans la norme CPRI, et aucune modification de la trame CPRI n'est nécessaire.

Le dispositif de traitement numérique de signal d'antenne est apte à mettre en oeuvre le procédé de traitement numérique de signal d'antenne qui vient d'être décrit, dans tous ses modes de réalisation.

Les différents aspects de l'invention qui viennent d'être décrits peuvent être mis en oeuvre indépendamment les uns des autres ou en combinaison les un avec les autres.

L'invention concerne aussi un programme d'ordinateur comprenant des instructions pour la mise en oeuvre des étapes du procédé d'aiguillage qui vient d'être décrit, lorsque ce programme est exécuté par un processeur.

L'invention concerne de plus un support d'enregistrement lisible par un dispositif d'aiguillage, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne également un programme d'ordinateur comprenant des instructions pour la mise en oeuvre des étapes du procédé de traitement numérique de signal d'antenne qui vient d'être décrit, lorsque ce programme est exécuté par un processeur.

L'invention concerne enfin un support d'enregistrement lisible par un dispositif de traitement numérique de signal d'antenne, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un système de transmission d'échantillons de données radio numérisées, selon un premier mode de réalisation de l'invention,
- la figure 2 présente de façon schématique un système de transmission d'échantillons de données radio numérisées, selon un second mode de réalisation de l'invention,
- la figure 3 présente de façon schématique un système de transmission d'échantillons de données radio numérisées, selon un troisième mode de réalisation de l'invention,
- la figure 4 présente un exemple de mise en oeuvre du procédé de traitement numérique de signal d'antenne, selon un aspect de l'invention,
- la figure 5 présente un exemple de mise en oeuvre du procédé d'aiguillage d'échantillons de données radio numérisées, selon un aspect de l'invention,
- la figure 6 présente un exemple de structure d'un dispositif de traitement numérique de signal d'antenne, selon un aspect de l'invention,
- la figure 7 présente un exemple de structure d'un dispositif d'aiguillage d'échantillons de données radio numérisées, selon un aspect de l'invention.

### 5. Description détaillée d'au moins un mode de réalisation de l'invention

Dans la suite de la description, on présente des exemples de plusieurs modes de réalisation de l'invention se basant sur une architecture de système de transmission pour station de base conforme à la norme CPRI, mais l'invention s'applique également à d'autres architectures de système de transmission, tel que par exemple celles utilisant les protocoles OBSAI ou ORI.

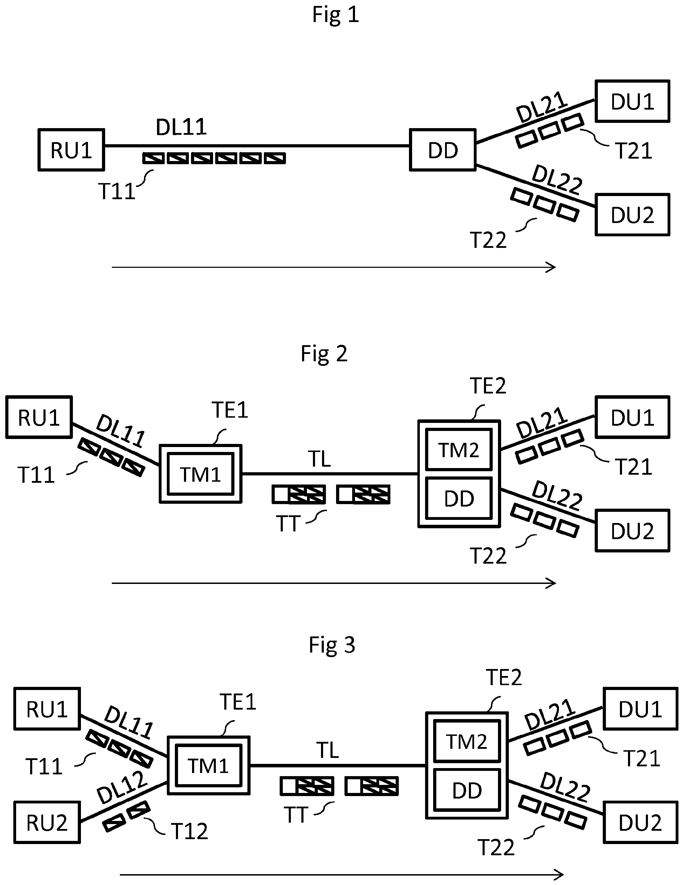

La **figure** 1 présente de façon schématique un système de transmission d'échantillons de données radio numérisées, selon un premier mode de réalisation de l'invention.

A l'aide d'un **procédé de traitement numérique de signal d'antenne** qui sera décrit par la suite, le dispositif d'antenne RU1 émet des trames de données reçues par une antenne radio partagée entre plusieurs opérateurs de réseau mobile, vers les dispositifs de contrôle respectifs de ces opérateurs.

Dans cet exemple, l'antenne est partagée, et donc le dispositif d'antenne RU1 aussi, entre deux opérateurs Op1 et Op2, les opérateurs ayant chacun leur dispositif de contrôle respectif DU1 et DU2.

Dans ce premier mode, le dispositif d'antenne RU1 est connecté par un lien de données DL11 à un dispositif d'aiguillage DD, qui lui-même est connecté à un dispositif de contrôle DU1 par un lien DL21 et à un dispositif DU2 par un lien DL22.

Des trames de données T11 sont émises par le dispositif d'antenne RU1 sur le lien DL11. Chacune de ces trames peut comprendre des échantillons de données destinés aux deux dispositifs de contrôle DU1 et DU2. Ces trames sont reçues par le dispositif d'aiguillage DD, qui, après un traitement par un procédé d'aiguillage qui sera décrit par la suite, émet des trames de données T21 vers le dispositif de contrôle DU1 et des trames de données T22 vers le dispositif de contrôle DU2. Les trames de données T21 ne comprennent que des échantillons de données destinés au dispositif de contrôle DU1, et les trames de données T22 ne comprennent que des échantillons de données destinés au dispositif de contrôle DU2.

Grâce au premier lien de données DL11, les dispositifs de contrôle DU1 et DU2 sont aisément éloignés du dispositif d'antenne RU1. Grâce aux seconds liens de données respectifs DL21 et DL22, ils fonctionnent de plus comme s'ils étaient chacun connecté par un lien de données dédié à une antenne dédiée, c'est à dire non partagée.

La **figure 2** présente de façon schématique un système de transmission d'échantillons de données radio numérisées, selon un second mode de réalisation de l'invention.

Dans ce second mode, un lien de transport TL est inséré entre le premier lien de données DL11 et les seconds liens de données DL21 et DL22, grâce à deux modules de transport TM1 et TM2 étant compris respectivement dans un équipement point d'entrée TE1 et un équipement point de sortie TE2 d'un même réseau de transport.

En entrée du réseau de transport, le module de transport TM1 encapsule les trames de données T11 émises par le dispositif d'antenne RU1 dans des trames de transport TT, selon un format dépendant du type de protocole de transport utilisé, par exemple Ethernet ou ODN G.709.

En sortie du réseau de transport, le module de transport TM2 reçoit les trames TT et les désencapsule afin de remettre au dispositif d'aiguillage DD les trames de données T11.

Avantageusement, la localisation du dispositif d'aiguillage peut être ainsi choisie avec plus de flexibilité, et la distance peut être augmentée par rapport au dispositif d'antenne, tout en utilisant un réseau de transport existant.

La **figure 3** présente de façon schématique un système de transmission d'échantillons de données radio numérisées, selon un troisième mode de réalisation de l'invention.

Ce troisième mode diffère du second en ce que chacun des dispositifs de contrôle d'opérateur peut contrôler plusieurs antennes partagées.

Dans cet exemple, deux antennes sont partagées, et donc les dispositifs d'antenne RU1 et RU2 aussi, entre deux opérateurs Op1 et Op2, les opérateurs ayant chacun leur dispositif de contrôle respectif DU1 et DU2.

Le dispositif d'antenne RU2 est connecté par un lien de données DL12 au module de transport TM1.

En entrée du réseau de transport, le module de transport TM1 encapsule dans des trames de transport TT les trames de données T11 et T12 émises respectivement par les dispositifs d'antenne RU1 et RU2 au travers des liens de données DL11 et DL12, sans distinguer les trames T11 et T12 entre elles.

En sortie du réseau de transport, le module de transport TM2 reçoit les trames TT et les désencapsule afin de remettre au dispositif d'aiguillage DD les trames de données T11 et T12.

Grâce à la combinaison des liens DL11, DL12, DL21, DL22, avec le dispositif d'aiguillage DD, chaque dispositif de contrôle DU1 ou DU2 fonctionne comme s'il contrôlait deux antennes qui lui étaient exclusivement dédiées.

Grâce au lien de transport TL, une grande flexibilité est permise dans la localisation des dispositifs d'antenne et des dispositifs de contrôle les uns par rapport aux autres.

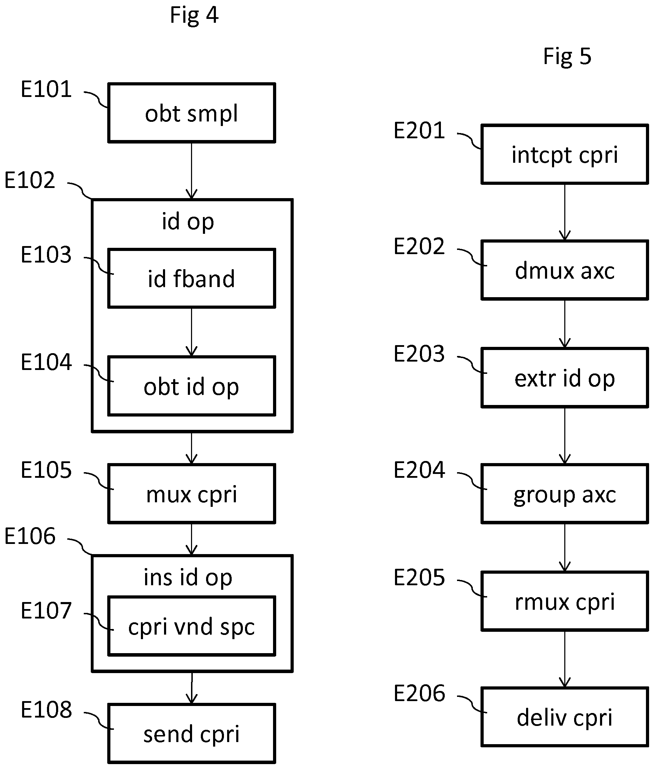

La **figure 4** présente un exemple de mise en oeuvre du procédé de traitement numérique de signal d'antenne, selon un aspect de l'invention. En référence aux figures 1, 2 et 3, ce procédé est mis en oeuvre par un dispositif d'antenne tel que les dispositifs RU1 et RU2.

Lors d'une étape E101, le dispositif d'antenne RU1 obtient des échantillons de données formatées sous forme d'échantillons AxC selon la norme CPRI.

Lors d'une étape E102, le dispositif d'antenne RU1 obtient pour chacun de ces échantillons un identifiant qui lui permettra par la suite d'adresser les données comprises dans les échantillons vers la bonne destination. Cet identifiant peut être associé à une plage de fréquences radio utilisée par l'antenne pour un opérateur précis, Op1 ou Op2, ou être associé directement à un de ces opérateurs. Dans le premier cas, l'étape E102 comprend une sous-étape E103 d'identification de la plage de fréquences radio utilisée pour l'échantillon de données, et une sous-étape E104 d'obtention de l'identifiant de l'opérateur auquel a été affectée cette plage de fréquences radio. Alternativement, l'identifiant peut être l'adresse MAC ou l'adresse IP du dispositif contrôleur d'antenne à qui doivent être adressées les données, et/ou un port logique de ce dispositif, étant entendu que le dispositif contrôleur d'antenne correspond de façon unique à un seul opérateur. On comprend que quel que soit l'identifiant utilisé, il doit avoir pour caractéristique de pouvoir identifier de façon unique le dispositif contrôleur d'antenne destinataire d'un échantillon de données, c'est à dire DU1 ou DU2.

Lors d'une étape E105, le dispositif d'antenne RU1 multiplexe les échantillons dans des premières trames de données T11, dans un ordre quelconque, qui peut être celui dans lequel ils sont obtenus.

Lors d'une étape E106, le dispositif d'antenne RU1 insert dans chacune des trames T11 les identifiants obtenus lors de l'étape E102, de façon à ce qu'il soit possible d'associer le bon identifiant à chaque échantillon compris dans la trame. Dans le cas général ou la trame de données T11 est une trame de type CPRI, l'étape E106 peut à cette fin comprendre une sous-étape E107 d'insertion des identifiants dans un champ de la trame réservé à cet effet, ou disponible. Un tel champ peut être le champ "Vendor Specific" (dédié équipementier, en anglais). Afin d'éviter la répétition inutile d'identifiants identiques correspondant à des échantillons consécutifs, ce champ peut comprendre des pointeurs aux endroits où les AxC changent d'identifiant dans la trame.

Lors d'une étape E108, le dispositif d'antenne RU1 transmet sur un lien unique DL11 les trames de données T11, vers un dispositif d'aiguillage DD, auquel sont connectés les dispositifs contrôleurs d'antenne destinataires DU1 et DU2.

Dans le troisième mode de réalisation décrit en référence à la figure 3, le dispositif d'antenne RU2 met en oeuvre ce procédé en effectuant les mêmes étapes, le procédé se terminant par la transmission de trames T12 sur le lien DL12, vers le même dispositif d'aiguillage DD.

La **figure 5** présente un exemple de mise en oeuvre du procédé d'aiguillage d'échantillons de données radio numérisées, selon un aspect de l'invention. En référence aux figures 1, 2 et 3, ce procédé est mis en oeuvre par un dispositif d'aiguillage tel que le dispositif DD.

Lors d'une étape E201, le dispositif d'aiguillage DD intercepte des trames de données T11 (et T12 si l'on se place dans le troisième mode de réalisation de l'invention). Ces trames peuvent être obtenues soit directement d'un ou de plusieurs dispositifs d'antenne tels que RU1 et RU2, soit d'un module de transport tel que TM2, en référence aux figures 1, 2 ou 3.

Lors d'une étape E202, le dispositif d'aiguillage DD démultiplexe les échantillons de données des trames de données interceptées.

Lors d'une étape E203, le dispositif d'aiguillage DD extrait des trames de données interceptées des identifiants de contrôleurs correspondant à chacun des échantillons démultiplexés.

Lors d'une étape E204, le dispositif d'aiguillage DD groupe les échantillons démultiplexés par identifiant de contrôleur.

Lors d'une étape E205, le dispositif d'aiguillage DD remultiplexe les échantillons par groupe dans des nouvelles trames de données, une nouvelle trame de données étant associée à un seul identifiant de contrôleur. Il n'est donc plus nécessaire d'insérer d'identifiant de contrôleur dans une nouvelle trame de données.

Lors d'une étape E206, le dispositif d'aiguillage DD transmet les nouvelles trames de données par l'intermédiaire de liens de données DL21 et DL22 respectivement vers les dispositifs contrôleurs destinataires DU1 et DU2, en les aiguillant sur le bon lien en fonction du groupe d'échantillons à partir duquel chaque nouvelle trame est remultiplexée.

Les différents modes de réalisation de l'invention qui viennent d'être décrits peuvent être combinés entre eux.

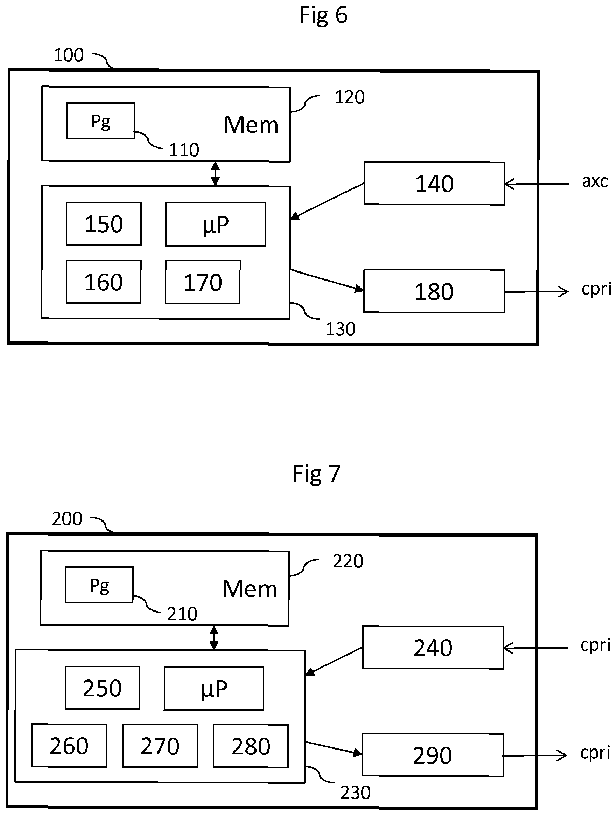

La **figure 6** présente un exemple de structure d'un dispositif de traitement numérique de signal d'antenne, selon un aspect de l'invention.

Le dispositif 100 de traitement numérique de signal d'antenne met en oeuvre le procédé de traitement numérique de signal d'antenne, dont différents modes de réalisation viennent d'être décrits.

Un tel dispositif 100 peut être mis en oeuvre dans un équipement de station de base, tel qu'une tête radiofréquence.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé de traitement numérique de signal d'antenne selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module d'obtention 140, apte à obtenir, de la part d'un module de numérisation de signal radio compris dans le dispositif d'antenne, des échantillons de données radio numérisés (axc) associés à une bande de fréquence,
- un module d'identification 150, apte à obtenir un identifiant de dispositif de contrôle ou d'opérateur à partir d'un échantillon de données radio numérisées,
- un module de multiplexage 160, apte à multiplexer les échantillons dans une trame de données,
- un module d'insertion 170, apte à insérer dans une trame de données les identifiants correspondant aux échantillons de la trame,
- un module de transmission 180, apte à transmettre les trames de données (cpri) vers un dispositif d'aiguillage.

La **figure 7** présente un exemple de structure d'un dispositif d'aiguillage d'échantillons de données radio numérisées, selon un aspect de l'invention

Le dispositif 200 d'aiguillage met en oeuvre le procédé d'aiguillage, dont différents modes de réalisation viennent d'être décrits.

Un tel dispositif 200 peut être mis en oeuvre dans un équipement de transport, tel qu'un routeur Ethernet, ou dans un commutateur optique de type ODN.

Par exemple, le dispositif 200 comprend une unité de traitement 230, équipée par exemple d'un microprocesseur µP, et pilotée par un programme d'ordinateur 210, stocké dans une mémoire 220 et mettant en oeuvre le procédé d'aiguillage selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 200 comprend :
- un module d'interception 240, apte à intercepter, en provenance du dispositif de traitement numérique de signal d'antenne ou d'un dispositif de transport, des trames de données (cpri),
- un module de démultiplexage 250, apte à démultiplexer des échantillons d'une trame de données,
- un module d'extraction 260, apte à extraire d'une trame de données des identifiants correspondant aux échantillons de la trame,
- un module de groupement 270, apte à grouper les échantillons démultiplexés par identifiant,
- un module de multiplexage 280, apte à multiplexer les échantillons par groupe dans une trame de données,
- un module de transmission 290, apte à transmettre les trames de données (cpri) vers une pluralité de dispositifs contrôleurs d'antenne.

Les modules décrits en relation avec les figures 6 et 7 peuvent être des modules matériels ou logiciels.

Les exemples de réalisation de l'invention qui viennent d'être présentés ne sont que quelques uns des modes de réalisation envisageables. Ils montrent que l'invention permet de connecter une pluralité d'antennes partagées entre plusieurs opérateurs à une pluralité de dispositifs contrôleurs d'antennes, chaque dispositif contrôleur d'antenne étant associé à un seul opérateur, tout en utilisant un protocole existant, en bénéficiant d'une grande flexibilité dans les choix de localisation et d'éloignement des dispositifs contrôleurs par rapport aux antennes, et sans nécessiter de modification de ces derniers dispositifs.

Ces exemples montrent comment l'invention peut être réalisée dans le sens montant, c'est à dire du ou des dispositifs d'antenne vers les dispositifs contrôleurs.

Dans le sens descendant lorsqu'il n'y a qu'un seul dispositif d'antenne, il suffit que le dispositif d'aiguillage comprenne en outre un module de réception des trames de données en provenance de chacun des liens de données associés aux dispositifs contrôleurs, et un module d'émission de ces trames non modifiées vers le lien de données associé au dispositif d'antenne.

Lorsqu'il y a plusieurs dispositifs d'antenne, un dispositif d'aiguillage descendant, similaire au dispositif d'aiguillage montant qui vient d'être décrit, peut en outre être utilisé. Il en diffère simplement par le module d'extraction, qui extrait des identifiants associés aux dispositifs d'antenne, et non pas des identifiants associés aux dispositifs contrôleurs.

Ce dispositif d'aiguillage descendant peut être compris dans l'équipement TE1 en référence à la figure 3, dans le cas où un lien de transport est utilisé pour augmenter la portée du système de transmission selon l'invention. Il peut également être compris dans le même équipement de communication que celui comprenant le dispositif d'aiguillage montant.

## Revendications

1. **Dispositif de traitement numérique de signal d'antenne,** appelé dispositif d'antenne (RU1, RU2), transmettant des échantillons de données radio numérisés, appelés échantillons, vers une pluralité de dispositifs contrôleurs d'antenne destinataires (DU1, DU2) identifiés par une pluralité respective d'identifiants de contrôleurs, **caractérisé en ce que** le dispositif d'antenne comprend les modules suivants :
• module d'obtention (140) des échantillons,
• module d'identification (150) d'un dispositif contrôleur (DU1, DU2) pour chaque échantillon à partir d'une bande de fréquence radio utilisée pour l'échantillon, produisant des identifiants de contrôleurs destinataires,
• module de multiplexage (160) des échantillons dans des trames de données radio numérisées, appelées trames de données (T11, T12),
• module d'insertion (170) dans les trames de données des identifiants de contrôleurs destinataires correspondant aux échantillons multiplexés,
• module de transmission (180) des trames de données vers la pluralité de dispositifs contrôleurs d'antenne par l'intermédiaire d'un lien de données CPRI (DL11, DL12) au travers d'un dispositif d'aiguillage apte à extraire les identifiants de contrôleurs destinataires à partir des trames de données.

2. **Procédé de traitement numérique de signal d'antenne,** pour la transmission d'échantillons de données radio numérisés, appelés échantillons, vers une pluralité de dispositifs contrôleurs d'antenne destinataires (DU1, DU2) identifiés par une pluralité respective d'identifiants de contrôleurs, **caractérisé en ce que** le procédé de traitement numérique de signal d'antenne comprend les étapes suivantes :
• obtention (E101) des échantillons,
• identification (E102) d'un dispositif contrôleur (DU1, DU2) pour chaque échantillon à partir d'une bande de fréquence radio utilisée pour l'échantillon, produisant des identifiants de contrôleurs destinataires,
• multiplexage (E105) des échantillons dans des trames de données radio numérisées, appelées trames de données (T11, T12),
• insertion (E106) dans les trames de données des identifiants de contrôleurs destinataires correspondant aux échantillons multiplexés,
• transmission (E108) des trames de données vers la pluralité de dispositifs contrôleurs d'antenne par l'intermédiaire d'un lien de données CPRI (DL11, DL12) au travers d'un dispositif d'aiguillage apte à extraire les identifiants de contrôleurs destinataires à partir des trames de données.

3. **Procédé de traitement numérique de signal d'antenne** selon la revendication 2, **caractérisé en ce que** l'étape d'identification (E102) comprend les étapes suivantes pour chacun des échantillons d'une trame de données (T11, T12) donnée :
• identification (E103) d'une bande de fréquence associée à chaque échantillon;
• obtention (E104) d'un identifiant de contrôleur correspondant à la bande de fréquence identifiée.

4. **Procédé de traitement numérique de signal d'antenne** selon la revendication 2, **caractérisé en ce que** l'étape d'insertion (E106) comprend l'étape suivante pour chacune des trames de données (T11, T12) :
• insertion (E107) des identifiants de contrôleurs destinataires correspondant aux échantillons multiplexés dans un champ des trames de données appelé Vendor Specific dans la norme CPRI.

5. **Programme d'ordinateur, caractérisé en ce qu'**il comprend des instructions pour la mise en oeuvre des étapes du procédé de traitement numérique de signal d'antenne selon la revendication 2, lorsque ce programme est exécuté par un processeur.

6. **Support d'enregistrement** lisible par un dispositif de traitement numérique de signal d'antenne sur lequel est enregistré le programme selon la revendication 5.

## Patentansprüche

1. Vorrichtung zur digitalen Bearbeitung eines Antennensignals, Antennenvorrichtung (RU1, RU2) genannt, die Stichproben von digitalisierten Funkdaten, Stichproben genannt, zu einer Vielzahl von Bestimmungsantennenkontrollervorrichtungen (DU1, DU2) übertragen, die durch eine jeweilige Vielzahl von Kontrolleridentifikatoren identifiziert werden, **dadurch gekennzeichnet, dass** die Antennenvorrichtung die folgenden Module umfasst:
• Modul für den Erhalt (140) der Stichproben,
• Modul zur Identifikation (150) einer Kontrollervorrichtung (DU1, DU2) für jede Stichprobe auf Basis eines Funkfrequenzbandes, das für die Stichprobe verwendet wird, das Bestimmungskontrolleridentifikatoren erzeugt,
• Modul zum Multiplexing (160) der Stichproben in Rahmen von digitalisierten Funkdaten, Datenrahmen (T11, T12) genannt,
• Modul zum Einsetzen (170) der Bestimmungskontrolleridentifikatoren entsprechend den gemultiplexten Stichproben in die Datenrahmen,
• Modul zur Übertragung (180) der Datenrahmen zu der Vielzahl von Antennenkontrollervorrichtungen mit Hilfe einer CPRI Datenverbindung (DL11, DL12) über eine Weichenanordnung, die geeignet ist, die Bestimmungskontrolleridentifikatoren aus den Datenrahmen zu entnehmen.

2. Verfahren zur digitalen Bearbeitung eines Antennensignals, um Stichproben von digitalisierten Funkdaten, Stichproben genannt, zu einer Vielzahl von Bestimmungsantennenkontrollervorrichtungen (DU1, DU2) zu übertragen, die durch eine jeweilige Vielzahl von Kontrolleridentifikatoren identifiziert werden, **dadurch gekennzeichnet, dass** das Verfahren zur digitalen Bearbeitung eines Antennensignals die folgenden Schritte umfasst:
• Erhalt (E101) der Stichproben,
• Identifikation (E102) einer Kontrollervorrichtung (DU1, DU2) für jede Stichprobe auf Basis eines Funkfrequenzbandes, das für die Stichprobe verwendet wird, das Bestimmungskontrolleridentifikatoren erzeugt,
• Multiplexing (E105) der Stichproben in Rahmen von digitalisierten Funkdaten, Datenrahmen (T11, T12) genannt,
• Einsetzen (E106) der Bestimmungskontrolleridentifikatoren entsprechend den gemultiplexten Stichproben in die Datenrahmen,
• Übertragung (E108) der Datenrahmen zu der Vielzahl von Antennenkontrollervorrichtungen mit Hilfe einer CPRI Datenverbindung (DL11, DL12) über eine Weichenanordnung, die geeignet ist, die Bestimmungskontrolleridentifikatoren aus den Datenrahmen zu entnehmen.

3. Verfahren zur digitalen Bearbeitung eines Antennensignals nach Anspruch 2, **dadurch gekennzeichnet, dass** der Identifikationsschritt (E102) die folgenden Schritte für jede der Stichproben eines gegebenen Datenrahmens (T11, T12) umfasst:
• Identifikation (E103) eines Frequenzbandes, das jeder Stichprobe zugeordnet ist;
• Erhalt (E104) eines Kontrolleridentifikators entsprechend dem identifizierten Frequenzband.

4. Verfahren zur digitalen Bearbeitung eines Antennensignals nach Anspruch 2, **dadurch gekennzeichnet, dass** der Einsetzschritt (E106) den folgenden Schritt für jeden der Datenrahmen (T11, T12) umfasst:
• Einsetzen (E107) der Bestimmungskontrolleridentifikatoren entsprechend den gemultiplexten Stichproben in ein Feld der Datenrahmen, genannt Vendor Specific in der Norm CPRI.

5. Computerprogram, **dadurch gekennzeichnet, dass** es Anweisungen für den Einsatz der Schritte des Verfahrens zur digitalen Bearbeitung eines Antennensignals nach Anspruch 2 umfasst, wenn dieses Program von einem Prozessor ausgeführt wird.

6. Speicherträger, der von einer Vorrichtung zur digitalen Bearbeitung eines Antennensignals lesbar ist, in dem das Programm nach Anspruch 5 gespeichert ist.

## Claims

1. **Digital antenna signal processing device,** called antenna device (RU1, RU2), transmitting digitized radio data samples, called samples, to a plurality of recipient antenna controller devices (DU1, DU2) identified by a respective plurality of controller identifiers, **characterized in that** the antenna device comprises the following modules:
• module for obtaining (140) the samples,
• module for identification (150) of a controller device (DU1, DU2) for each sample from a radio frequency band used for the sample, producing recipient controller identifiers,
• module for multiplexing (160) the samples in digitized radio data frames, called data frames (T11, T12),
• module for insertion (170) in the data frames of the recipient controller identifiers corresponding to the multiplexed samples,
• module for transmission (180) of the data frames to the plurality of antenna controller devices via a CPRI data link (DL11, DL12) through a switching device able to extract the recipient controller identifiers from the data frames.

2. **Digital antenna signal processing method,** for the transmission of digitized radio data samples, called samples, to a plurality of recipient antenna controller devices (DU1, DU2) identified by a respective plurality of controller identifiers, **characterized in that** the digital antenna signal processing method comprises the following steps:
• obtaining (E101) of the samples,
• identification (E102) of a controller device (DU1, DU2) for each sample from a radio frequency band used for the sample, producing recipient controller identifiers,
• multiplexing (E105) of the samples in digitized radio data frames, called data frames (T11, T12),
• insertion (E106) in the data frames of the recipient controller identifiers corresponding to the multiplexed samples,
• transmission (E108) of the data frames to the plurality of antenna controller devices via a CPRI data link (DL11, DL12) through a switching device able to extract the recipient controller identifiers from the data frames.

3. **Digital antenna signal processing method** according to Claim 2, **characterized in that** the identification step (E102) comprises the following steps for each of the samples of a given data frame (T11, T12):
• identification (E103) of a frequency band associated with each sample;
• obtaining (E104) of a controller identifier corresponding to the identified frequency band.

4. **Digital antenna signal processing method** according to Claim 2, **characterized in that** the insertion step (E106) comprises the following step for each of the data frames (T11, T12) :
• insertion (E107) of the recipient controller identifiers corresponding to the multiplexed samples in a field of the data frames called Vendor Specific in the CPRI standard.

5. **Computer program, characterized in that** it comprises instructions for the implementation of the steps of the digital antenna signal processing method according to Claim 2, when this program is executed by a processor.

6. **Storage medium** that can be read by a digital antenna signal processing device on which is stored the program according to Claim 5.
